(19) Europäisches Patentamt
European Patent Office
Office européen des brevets

(11) **EP 3 096 112 B1**

(12) **EUROPÄISCHE PATENTSCHRIFT**

(45) Veröffentlichungstag und Bekanntmachung des Hinweises auf die Patenterteilung:
**30.06.2021 Patentblatt 2021/26**

(51) Int Cl.:
**G01C 21/20** (2006.01)    **G01C 21/16** (2006.01)

(21) Anmeldenummer: **16169149.8**

(22) Anmeldetag: **11.05.2016**

(54) **DRAHTLOSES KOMMUNIKATIONSSYSTEM UND VERFAHREN ZUM BERECHNEN VON ABSTANDSÄNDERUNGEN ZWISCHEN ZWEI MOBILEN KOMMUNIKATIONSEINRICHTUNGEN**

WIRELESS COMMUNICATION SYSTEM AND METHOD FOR THE CALCULATION OF CHANGES IN DISTANCE BETWEEN TWO MOBILE COMMUNICATION DEVICES

SYSTÈME DE COMMUNICATION SANS FIL ET PROCÉDÉ DE CALCUL DES VARIATIONS DE DISTANCE ENTRE DEUX DISPOSITIFS DE COMMUNICATION MOBILES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.05.2015 DE 102015107421**

(43) Veröffentlichungstag der Anmeldung:
**23.11.2016 Patentblatt 2016/47**

(73) Patentinhaber: **Deutsche Telekom AG**
**53113 Bonn (DE)**

(72) Erfinder: **Witych, Michael**
**53227 Bonn (DE)**

(74) Vertreter: **Blumbach · Zinngrebe Patentanwälte PartG mbB**
**Elisabethenstrasse 11**
**64283 Darmstadt (DE)**

(56) Entgegenhaltungen:
**US-A1- 2007 259 690    US-A1- 2013 136 089**

- **HWANG TAEHWAN ET AL: "SANA: Safety-Aware Navigation App for pedestrian protection in vehicular networks", 2014 INTERNATIONAL CONFERENCE ON INFORMATION AND COMMUNICATION TECHNOLOGY CONVERGENCE (ICTC), IEEE, 22. Oktober 2014 (2014-10-22), Seiten 947-953, XP032704773, DOI: 10.1109/ICTC.2014.6983341 [gefunden am 2014-12-11]**
- **CHUNYI PENG ET AL: "Point&Connect", PROCEEDINGS OF THE 7TH INTERNATIONAL CONFERENCE ON MOBILE SYSTEMS, APPLICATIONS, AND SERVICES, MOBISYS '09, 22. Juni 2009 (2009-06-22), Seite 137, XP055306802, New York, New York, USA DOI: 10.1145/1555816.1555831 ISBN: 978-1-60558-566-6**

**Beschreibung**

Die Erfindung betrifft ein drahtloses Kommunikationssystem sowie ein Verfahren zum Berechnen von Abstandsänderungen bzw. Abstandsänderungen zwischen wenigstens zwei mobilen Kommunikationseinrichtungen, und zwar ohne Kenntnis absoluter Positionen und ohne Berücksichtigung von Messungen zwischen den zwei mobilen Kommunikationseinrichtungen.

Heutige Smartphones sind mit zahlreichen Funktionen ausgestattet, wie zum Beispiel der Positionsbestimmung mittels eines GPS-Empfängers und eines Beschleunigungsmessers, wobei allein mittels des Beschleunigungsmessers eine Positionsänderung des jeweiligen Smartphones zwischen zwei Zeitpunkten bestimmt werden kann.

Aus der DE 10 2014 201 457 A1 sind ein Verfahren und eine Vorrichtung für soziales Netzwerken in Fahrzeugen bekannt. Auf Anfrage können einem Fahrer Positionsinformationen anderer Fahrer zur Verfügung gestellt werden.

In dem Aufsatz von Hwang Taehwan et al. "SANA: Safety-Aware Navigation App for pedestrian protection in vehicular networks", 2014 INTERNATIONAL CONFERENCE ON INFORMATION AND COMMUNIACTION TECHNOLOGY CONVERGENCE (ICTC), IEEE, 22.October 2014 (2014-10-22), Seiten 947-953, XP032704773, DOI:10.11/09/ICTC.2014.6983341 wird eine sicherheitsbewusste Navigationsapp für einen Fußgängerschutz in einem Fahrzeugnetzwerk beschrieben. Damit Fußgänger erfolgreich geschützt beziehungsweise gewarnt werden können, ist es erforderlich, GPS Positionsdaten häufig zu aktualisieren.

Um eine Kollisionsvorhersage zwischen einem Fußgänger und einem Fahrzeug treffen zu können, läuft jeweils ein Navigationsclient auf dem Smartphone des Fußgängers und einem Smartphone des Fahrzeugs. Der Navigationsclient des Fahrzeugs oder des Fußgängers überermittelt periodisch Positionsdaten, die Richtung und die Geschwindigkeit zu einem Navigationsserver, wobei der Navigationsserver Positions- und Bewegungsvektormatrizen für die Fußgänger und die Fahrzeuge in einem Zielstraßennetzwerkgrafen bereithält, um eine mögliche Kollision in dem Grafen vorherzusagen.

"Point&Connect: Intention-based Device Pairing for Mobile Phone Users" von C.Peng et al., Proceedings of the 7th International Conference on mobile systems,applications, and services MOBISYS '09, 22. Juni 2009, Seite 137, offenbart ein Verfahren zum paarweisen Koppeln von Mobilgeräten.

Der Erfindung liegt die Aufgabe zugrunde, ein Verfahren und ein drahtloses Kommunikationssystem zu schaffen, welche in der Lage sind, die relative Bewegung zweier mobiler Kommunikationseinrichtungen zueinander zu beobachten und zu ermitteln, ohne die absoluten Positionen der mobilen Kommunikationseinrichtungen zu kennen oder zu berücksichtigen und ohne Beobachtungen zu berücksichtigen, die Aussagen über absolute Positionen beinhalten.

Ein Kerngedanke der Erfindung kann darin gesehen werden, dass wenigstens zwei mobile Kommunikationseinrichtungen ihre Positionskoordinatenfortschritte beziehungsweise Positionskoordinatenänderungen zwischen zwei Zeitpunkten erfassen können, aus denen dann die betragsmäßig maximalen Abstandsänderungen zwischen den wenigstens zwei mobilen Kommunikationseinrichtungen zwischen diesen zwei Zeitpunkten berechnet werden können, und zwar ohne Berücksichtigung der absoluten Positionen der mobilen Kommunikationseinrichtungen und ohne Beobachtungen zu berücksichtigen, die Aussagen über absolute Positionen beinhalten. Die Angabe "ohne Berücksichtigung der absoluten Positionen der wenigstens zwei mobilen Kommunikationseinrichtungen und ohne Beobachtungen zu berücksichtigen, die Aussagen über absolute Positionen beinhalten" enthält auch die Fälle, dass die absoluten Positionen gar nicht bekannt sind oder bei der Berechnung der betragsmäßig maximalen Abstandsänderung nicht verwendet werden. Liegt zusätzlich zu einem einzigen Zeitpunkt der Wert des Abstandes vor, so kann für andere Zeitpunkte durch die Berechnung der betragsmäßig maximalen Abstandsänderungen mittels des Verfahrens der Erfindung der Abstand für andere Zeitpunkte berechnet werden.

Dank dieser Maßnahme ist es möglich, die relative Bewegung bzw. betragsmäßig maximalen Abstandsänderungen hinsichtlich einer unbekannten Strecke zwischen wenigstens zwei mobilen Kommunikationseinrichtungen auch dann zu verfolgen, wenn den wenigstens zwei mobilen Kommunikationseinrichtungen keine Positionsdaten zur Verfügung stehen.

Das oben genannte technische Problem wird zum einen durch die Merkmale des Anspruchs 1 gelöst.

Danach ist ein drahtloses Kommunikationssystem zum Berechnen von betragsmäßig maximalen Abstandsänderungen zwischen zwei mobilen Kommunikationseinrichtungen vorgesehen. Das Mobilfunksystem weist eine erste mobile Kommunikationseinrichtung und eine zweite mobile Kommunikationseinrichtung auf, die jeweils eine Messeinrichtung zum Ermitteln einer Positionskoordinatenänderung der jeweiligen mobilen Kommunikationseinrichtung zwischen einem Startzeitpunkt t(0) und einem späteren Zeitpunkt t(1) aufweisen. Die Messeinrichtungen weisen jeweils einen Beschleunigungsmesser und einen Kompass auf. Die Positionskoordinaten der ersten mobilen Kommunikationseinrichtung und die Positionskoordinaten der zweiten mobilen Kommunikationseinrichtung können für einen Startzeitpunkt t(0) beliebig vorgegeben werden. Mit anderen Worten: Die Startpunkte der ersten und zweiten mobilen Kommunikationseinrichtungen werden ohne Berücksichtigung derer absoluten Positionen beliebig definiert.

Wenigstens eine der mobilen Kommunikationseinrichtung, beispielsweise die erste mobile Kommunikationseinrichtung, weist eine Auswerte- und Steuereinrichtung auf, die dazu ausgebildet ist,

- die Messeinrichtung der ersten mobilen Kommunikationseinrichtung zu veranlassen, eine Positionskoordinatenänderung der ersten mobilen Kommunikationseinrichtung zwischen dem Startzeitpunkt t(0) und dem Zeitpunkt t(1) zu ermitteln, indem Eingangssignale des Beschleunigungsmessers und des Kompasses der Messeinrichtung der ersten mobilen Kommunikationseinrichtung verarbeitet werden,
- die Messeinrichtung der zweiten mobilen Kommunikationseinrichtung zu veranlassen, eine Positionskoordinatenänderung der zweiten mobilen Kommunikationseinrichtung zwischen dem Startzeitpunkt t(0) und dem Zeitpunkt t(1) zu ermitteln, indem Eingangssignale des Beschleunigungsmessers und des Kompasses der Messeinrichtung der zweiten mobilen Kommunikationseinrichtung verarbeitet werden,
- die zweite mobile Kommunikationseinrichtung zu veranlassen, die ermittelte Positionskoordinatenänderung und den dazugehörenden Zeitpunkt t(1) zur ersten mobilen Kommunikationseinrichtung zu übertragen und
- die betragsmäßig maximale Abstandsänderung zwischen der ersten mobilen Kommunikationseinrichtung und der zweiten mobilen Kommunikationseinrichtung in Abhängigkeit von der Positionskoordinatenänderung der ersten mobilen Kommunikationseinrichtung und der Positionskoordinatenänderung der zweiten mobilen Kommunikationsänderung zwischen dem Startzeitpunkt t(0) und dem Zeitpunkt t(1) zu ermitteln.

Auf diese Weise kann die Abstandsänderung zwischen den beiden mobilen Kommunikationseinrichtungen gemessen werden, und zwar ohne Berücksichtigung deren absoluter Positionen.

Bei den mobilen Kommunikationseinrichtungen kann es sich um Smartphones, PDAs und dergleichen handeln.

Um betragsmäßig maximale Abstandsänderungen zwischen den beiden mobilen Kommunikationseinrichtungen auch über ein längeres, beispielsweise einstellbares Zeitintervall hinweg beobachten zu können, ist die Auswerte-Steuereinrichtung der ersten mobilen Kommunikationseinrichtung ferner dazu ausgebildet,

- die Messeinrichtung der ersten mobilen Kommunikationseinrichtung zu veranlassen, für weitere aufeinander folgende Zeitpunkte t(i), mit i = 2, 3, 4...n, jeweils die Positionskoordinatenänderungen der ersten mobilen Kommunikationseinrichtung relativ zu den Positionskoordinaten wenigstens eines früheren Zeitpunktes t(i-1) zu ermitteln,
- die Messeinrichtung der zweiten mobilen Kommunikationseinrichtung zu veranlassen, für die weiteren aufeinander folgenden Zeitpunkte t(i) jeweils die Positionskoordinatenänderungen der zweiten mobilen Kommunikationseinrichtung relativ zu den Positionskoordinaten wenigstens eines früheren Zeitpunktes t(i-1) zu ermitteln,
- die zweite mobile Kommunikationseinrichtung aufzufordern, die ermittelten Positionskoordinatenänderungen zusammen mit den Zeitpunkten t(i) zur ersten mobilen Kommunikationseinrichtung zu übertragen, und
- für wenigstens einen der weiteren Zeitpunkte t(i) die betragsmäßig maximale Abstandsänderung zwischen der ersten mobilen Kommunikationseinrichtung und der zweiten mobilen Kommunikationseinrichtung in Abhängigkeit von den Positionskoordinatenänderungen der ersten und zweiten mobilen Kommunikationseinrichtung während des jeweiligen Zeitpunktes t(i) und dem wenigstens einen früheren Zeitpunkt t(i-1) zu ermitteln.

Wiederum sei angemerkt, dass die betragsmäßig maximale Abstandsänderung der unbekannten Strecke zwischen den unbekannten Positionen der ersten mobilen Kommunikationseinrichtung und der zweiten mobilen Kommunikationseinrichtung ermittelt wird.

Die Messeinrichtungen der ersten und zweiten mobilen Kommunikationseinrichtungen sind vorzugsweise Beschleunigungsmesseinrichtungen.

Das oben genannte technische Problem wird zum Anderen durch die Verfahrensschritte des Anspruchs 3 gelöst.

Danach wird ein Verfahren zum Berechnen von betragsmäßig maximalen Abstandsänderungen zwischen zwei mobilen Kommunikationseinrichtungen zur Verfügung gestellt. Wiederum sei angemerkt, dass die absoluten Positionen der mobilen Kommunikationseinrichtungen hierfür nicht berücksichtigt werden. Das Verfahren weist folgende Verfahrensschritte auf:

a1) Speichern in einer ersten mobilen Kommunikationseinrichtung die Positionskoordinaten einer frei wählbaren Startposition;
a2) Speichern in einer zweiten mobilen Kommunikationseinrichtung die Positionskoordinaten einer frei wählbaren Startposition;
b1) Ermitteln in der ersten mobilen Kommunikationseinrichtung zu einem Zeitpunkt t(1) einer Positionskoordinatenänderung bezüglich der Positionskoordinaten der Startposition der ersten mobilen Kommunikationseinrichtung;
b2) Ermitteln in der zweiten mobilen Kommunikationseinrichtung zu dem Zeitpunkt t(1) einer Positionskoordinatenänderung bezüglich der Positionskoordinaten der Startposition der zweiten mobilen Kommunikationseinrichtung; und
c) Berechnen, in wenigstens einer der mobilen Kommunikationseinrichtungen, für den Zeitpunkt t(1) die betragsmäßig maximale Abstandsänderung zwischen der ersten mobilen Kommunikationseinrichtung und der zweiten mobilen Kommunikationseinrichtung in Abhängigkeit von den in den Schritt b1) und b2) ermittelten Positionskoordinatenänderungen.

Um die betragsmäßig maximalen Abstandsänderungen zwischen den beiden mobilen Kommunikationseinrichtungen auch für ein längeres, beispielsweise einstellbares Zeitintervall beobachten zu können, kann in Schritt b1) in der ersten mobilen Kommunikationseinrichtung für weitere aufeinander folgende Zeitpunkte t(i) mit i = 2, 3, 4...n jeweils eine Positionskoordinatenänderung bezüglich der Positionskoordinaten der ersten mobilen Kommunikationseinrichtung wenigstens eines früheren Zeitpunktes t(i-1) ermittelt werden, in Schritt b2) in der zweiten mobilen Kommunikationseinrichtung für die weiteren aufeinander folgende Zeitpunkte t(i) mit i = 2, 3, 4...n, jeweils eine Positionskoordinatenänderung bezüglich der Positionskoordinaten der zweiten mobilen Kommunikationseinrichtung wenigstens eines früheren Zeitpunktes t(i-1) ermittelt werden, wobei in Schritt c) in wenigstens einer der mobilen Kommunikationseinrichtung für wenigstens einen weiteren Zeitpunkt t(i) die betragsmäßig maximale Abstandsänderung zwischen der ersten mobilen Kommunikationseinrichtung und der zweiten mobilen Kommunikationseinrichtung in Abhängigkeit von den in den Schritten b1) und b2) ermittelten Positionskoordinatenänderungen berechnet werden.

Nachfolgend wird die Erfindung anhand eines Ausführungsbeispiels in Verbindung mit den beiliegenden Zeichnungen näher erläutert. Es zeigen:

Fig. 1 zwei mobile Kommunikationseinrichtungen eines beispielhaften drahtlosen Kommunikationssystems, in welchem die Erfindung verwirklicht wird,

Fig. 2 eine grafische Darstellung der sich bewegenden mobilen Kommunikationseinrichtungen, die in Fig. 1 gezeigt sind,

Fig. 3 zwei Grafiken A) und B), welche die Gültigkeit der Berechnung der betragsmäßig maximalen Abstandsänderung zwischen den beiden in Fig. 1 gezeigten mobilen Kommunikationseinrichtungen erläutern, und

Fig. 4 eine Grafik C), welche die Gültigkeit der Berechnung der betragsmäßig maximalen Abstandsänderung zwischen den beiden in Fig. 1 gezeigten mobilen Kommunikationseinrichtungen erläutert.

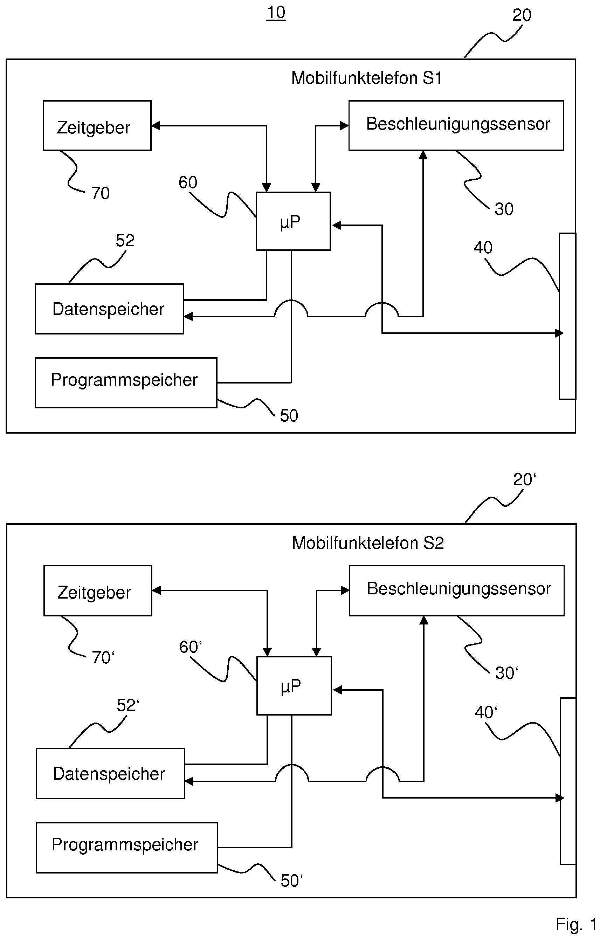

In Fig. 1 ist ein beispielhaftes drahtloses Kommunikationssystem 10 zum Berechnen von Abstandsänderungen zwischen wenigstens zwei mobilen Kommunikationseinrichtungen 20 und 20' dargestellt. Das drahtlose Kommunikationssystem 10 kann ein Mobilfunksystem, ein WLAN-basiertes Kommunikationssystem oder auch eine Kombination aus beiden sein. Bei den mobilen Kommunikationseinrichtungen 20 und 20' kann es sich um Smartphones handeln, die in den Figuren 1 bis 4 mit S1 bzw. S2 bezeichnet sind. Die in Fig. 1 dargestellten mobilen Kommunikationseinrichtungen 20 und 20' enthalten lediglich der einfachen Darstellung wegen nur die Merkmale, die zur Erläuterung der Erfindung hilfreich sind. Angemerkt sei, dass im gezeigten Beispiel die beiden mobilen Kommunikationseinrichtungen 20 und 20' identisch oder ähnlich aufgebaut sind, so dass es ausreicht, lediglich den Aufbau und die Funktionsweise des Smartphones 20 zu erläutern.

Das Smartphone 20 enthält wenigstens eine drahtlose Kommunikationsschnittstelle 40, über die es mittelbar oder direkt mit anderen mobilen Kommunikationseinrichtungen, beispielsweise dem Smartphone 20' kommunizieren und Daten austauschen kann. Lediglich beispielhaft sei angenommen, dass es sich bei der Kommunikationsschnittstelle 40 um eine Bluetooth-Schnittstelle, eine Wi-Fi Direct-fähige Schnittstelle oder eine LTE-Schnittstelle handeln kann. Weiterhin weist das Smartphone 20 als Messeinrichtung 30 eine Beschleunigungsmesseinrichtung beziehungsweise einen Beschleunigungssensor auf. Als Beschleunigungssensor können auch herkömmliche Beschleunigungssensoren eingesetzt werden. Weiterhin ist ein Zeitgeber 70 vorgesehen, der unter anderem dazu dient, den Beschleunigungssensor 30 zu beliebigen oder einstellbaren Zeitpunkten zu triggern, um Positionskoordinatenänderungen des Smartphones 20 messen zu können. Die vom Beschleunigungssensor 30 gemessenen Positionskoordinatenänderungen können in einem Datenspeicher 52 abgelegt werden. Weiterhin ist ein Programmspeicher 50 vorgesehen, in welchem ein Programm zum Berechnen von Abstandsänderungen, insbesondere zum Berechnen von betragsmäßig maximalen Abstandsänderungen, zwischen wenigstens zwei mobilen Kommunikationseinrichtungen abgelegt werden kann. Eine Auswerte- und Steuereinrichtung 60 ist vorgesehen, die die Funktionen und den Betrieb des Smartphones 20 überwacht und steuert. Hierzu ist die Auswerte- und Steuereinrichtung 60 mit dem Beschleunigungssensor 30, dem Zeitgeber 70, dem Datenspeicher 52, dem Programmspeicher 50 und der drahtlosen Kommunikationsschnittstelle 40 verbunden.

Die Auswerte- und Steuereinrichtung 60 kann als Mikrocontroller oder Mikroprozessor ausgebildet sein. Neben den dargestellten Komponenten kann das Smartphone 20 auch über einen GPS-Empfänger (nicht dargestellt) verfügen, dessen Funktion aber nicht benötigt wird.

In ähnlicher Weise enthält das Smartphone 20' wenigstens eine drahtlose Kommunikationsschnittstelle 40', über die es mittelbar oder direkt mit anderen mobilen Kommunikationseinrichtungen, beispielsweise dem Smartphone 20 kommunizieren und Daten austauschen kann. Lediglich beispielhaft sei angenommen, dass es sich bei der Kommunikationsschnittstelle 40' um eine Bluetooth-Schnittstelle, eine Wi-Fi Direct-fähige Schnittstelle oder eine LTE-Schnittstelle handeln kann. Weiterhin weist das Smartphone 20' als Messeinrichtung 30' eine Beschleunigungsmesseinrichtung beziehungsweise einen Beschleunigungssensor auf. Als Beschleunigungssensor können auch herkömmliche Beschleunigungssensoren eingesetzt werden. Weiterhin ist ein Zeitgeber 70' vorgesehen, der unter anderem dazu dient, den Beschleunigungssensor 30' zu beliebigen oder einstellbaren Zeitpunkten zu triggern, um Positionskoordinatenänderungen des Smartphones 20' messen zu können. Die vom Beschleunigungssensor 30' gemessenen Positionskoordinatenänderungen können in einem Datenspeicher 52' abgelegt werden. Weiterhin ist ein Programmspeicher 50' vorgesehen, in welchem ein Programm zum Berechnen von Abstandsänderungen, insbesondere zum Berechnen von betragsmäßig maximalen Abstandsänderungen, zwischen wenigstens zwei mobilen Kommunikationseinrichtungen abgelegt werden kann. Eine Auswerte- und Steuereinrichtung 60' ist vorgesehen, die die Funktionen und den Betrieb des Smartphones 20' überwacht und steuert. Hierzu ist die Auswerte- und Steuereinrichtung 60' mit dem Beschleunigungssensor 30', dem Zeitgeber 70', dem Datenspeicher 52', dem Programmspeicher 50' und der drahtlosen Kommunikationsschnittstelle 40' verbunden.

Die Auswerte- und Steuereinrichtung 60' kann als Mikrocontroller oder Mikroprozessor ausgebildet sein. Neben den dargestellten Komponenten kann das Smartphone 20' auch über einen GPS-Empfänger (nicht dargestellt) verfügen, dessen Funktion aber nicht benötigt wird.

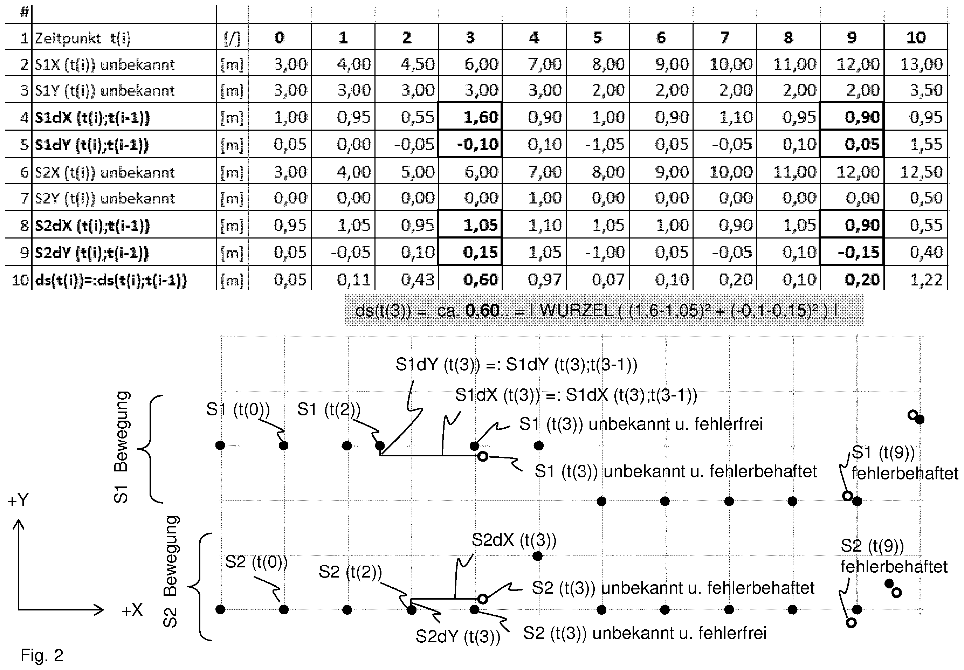

Angemerkt sei an dieser Stelle noch, dass es sich bei den Beschleunigungssensoren 30 und 30' jeweils um eine Messeinrichtung handelt, die, ohne eine absolute Position zu kennen oder zu bestimmen, in der jeweiligen mobilen Kommunikationseinrichtung 20 bzw. 20' die Koordinatenfortschritte zwischen zwei Zeitpunkten bestimmt. Die Messeinrichtungen 30 und 30' kombinieren jeweils mehrere Messmethoden zur Bestimmung von Koordinatenfortschritten, indem Eingangssignale eines Beschleunigungsmessers und eines Kompasses, die die jeweilige Messeinrichtung bilden, verarbeitet werden. Nachfolgend wird die Funktionsweise des in Fig. 1 dargestellten Mobilfunksystems 10 insbesondere in Verbindung mit Fig. 2 näher erläutert.

In der unteren Hälfte der Fig. 2 sind simulierte, beispielhafte 2-dimensionale Bewegungen der Smartphones 20 bzw. S1 und 20' bzw. S2 über einen Beobachtungszeitraum von t(0) bis t(10) gezeigt, wobei die unbekannten und fehlerfreien Positionen zu den diskreten Zeitpunkten t(i) durch schwarze Punkte dargestellt sind, während die unbekannten und fehlerbehafteten Positionen durch Kreise dargestellt sind. Die fehlerbehafteten Positionen sind durch Messungsungenauigkeiten der Beschleunigungssensoren 30 und 30' bedingt. Der besseren Lesbarkeit wegen sind in Fig. 2 unbekannte, fehlerbehaftete Positionen nur zu den Zeitpunkten t(3), t(9) und t(10) dargestellt. Angemerkt sei, dass der Beobachtungszeitraum sich auch über deutlich mehr Zeitpunkte erstrecken kann.

In der oberen Hälfte der Fig. 2 ist eine Tabelle dargestellt, die folgende simulierte Situation widerspiegelt:
In Zeile 1 sind ein Startzeitpunkt t(0) und weitere Zeitpunkte t(i), mit i = 1 bis 10 dargestellt, zu denen der Beschleunigungssensor 30 des Smartphones 20 und der Beschleunigungssensor 30' des Smartphones 20' jeweils Positionskoordinatenänderungen messen sollen. Getriggert werden die Beschleunigungssensoren 30 und 30' durch den Mikroprozessor 60 bzw. durch den Mikroprozessor 60'. Die Mikroprozessoren 60 und 60' können wiederum durch den Zeitgeber 70 bzw. 70' angestoßen werden. In der Zeile 1 wird die dimensionslose Indizierung i der Zeitpunkte t(i) dargestellt, wobei die Zeitabstände zwischen jeweils zwei Zeitpunkten gleich oder unterschiedlich lang sein können. Für gleichlange Zeitabstände von 1 Sekunde würden für die Positionen der Smartphones S1 und S2 mittlere Geschwindigkeiten von ca. 1 Meter/Sekunde als mögliche Fußgängergeschwindigkeiten folgen.

Die Zeile 2 enthält die unbekannten x-Koordinaten der unbekannten und fehlerfreien Positionen des Smartphones 20 zu den jeweiligen Zeitpunkten t(0) bis t(10). Dies wird durch die Notation S1X(t(i)) angegeben.

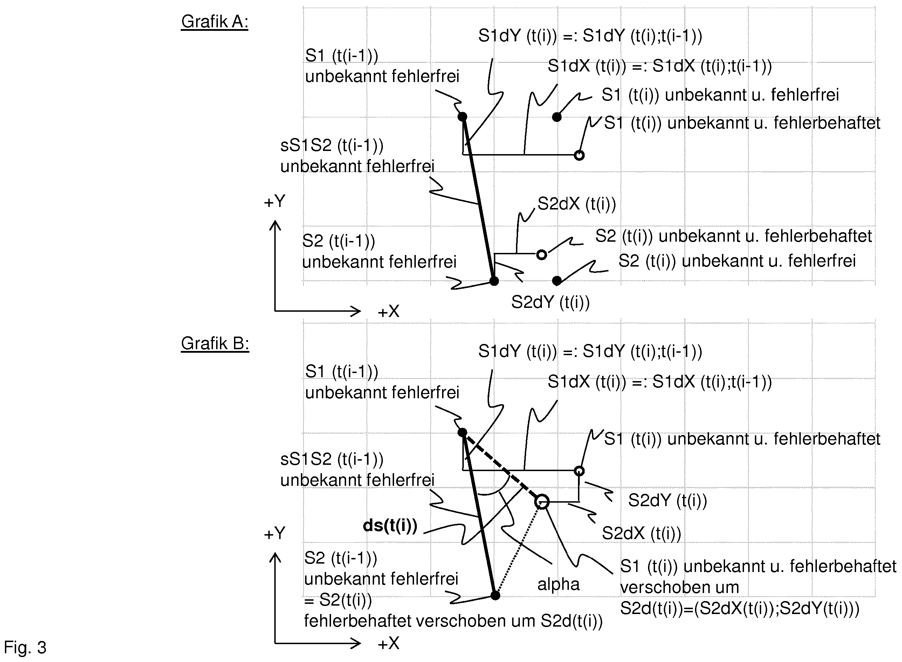

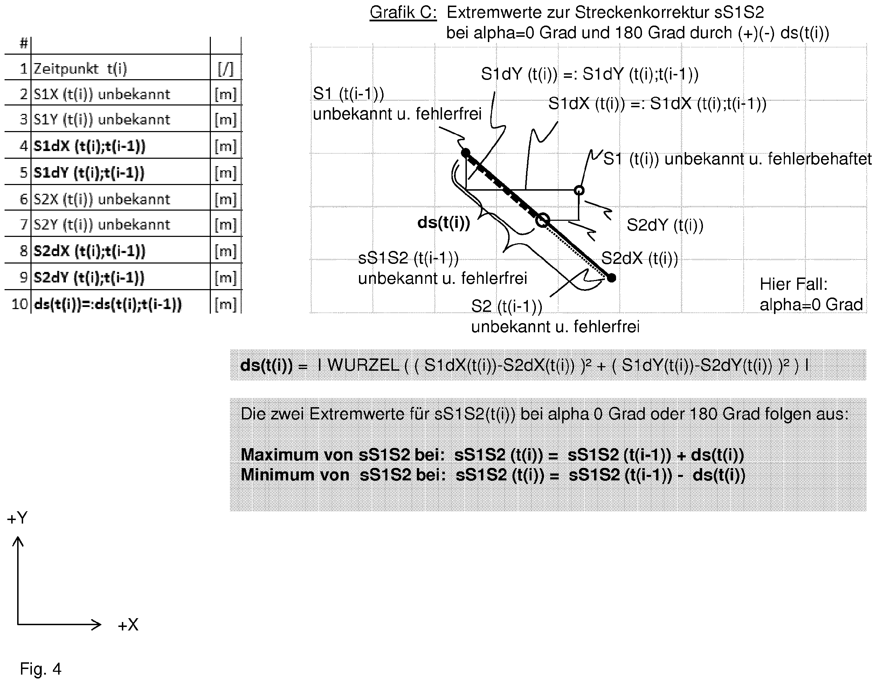

Die Zeile 3 enthält die unbekannten y-Koordinaten der unbekannten und fehlerfreien Positionen des Smartphones 20 zu den jeweiligen Zeitpunkten t(0) bis t(10). Dies wird durch die Notation SIY(t(i)) angegeben. In Fig. 2 wird demzufolge ein Punkt S1(t(i)) durch die Koordinaten (S1X(t(i)); S1Y(t(i))) dargestellt. Diese Bezeichnung gilt auch für die Figuren 3 und 4.

Die Zeile 4 enthält die vom Beschleunigungssensor 30 ermittelten Änderungen der x-Positionskoordinate zwischen einem Zeitpunkt t(i) und einem früheren Zeitpunkt t(i-1). Dies wird durch die Notation S1dx(t(i); t(i-1)) angegeben.

Die Zeile 5 enthält die vom Beschleunigungssensor 30 ermittelten Änderungen der y-Positionskoordinate zwischen einem Zeitpunkt t(i) und einem früheren Zeitpunkt t(i-1). Dies wird durch die Notation S1dy(t(i); t(i-1)) angegeben.

Die Zeile 6 enthält die unbekannten x-Koordinaten der unbekannten und fehlerfreien Positionen des Smartphones 20' zu den jeweiligen Zeitpunkten t(0) bis t(10). Dies wird durch die Notation S2X(t(i)) angegeben.

Die Zeile 7 enthält die unbekannten y-Koordinaten der unbekannten und fehlerfreien Positionen des Smartphones 20' zu den jeweiligen Zeitpunkten t(0) bis t(10). Dies wird durch die Notation S2Y(t(i)) angegeben. In Fig. 2 wird demzufolge ein Punkt S2(t(i)) durch die Koordinaten (S2X(t(i)); S2Y(t(i))) dargestellt. Diese Bezeichnung gilt auch für die Figuren 3 und 4.

Die Zeile 8 enthält die vom Beschleunigungssensor 30' ermittelten Änderungen der x-Positionskoordinate zwischen einem Zeitpunkt t(i) und einem früheren Zeitpunkt t(i-1). Dies wird durch die Notation S2dx(t(i); t(i-1)) angegeben.

Die Zeile 9 enthält die vom Beschleunigungssensor 30' ermittelten Änderungen der y-Positionskoordinate zwischen einem Zeitpunkt t(i) und einem früheren Zeitpunkt t(i-1). Dies wird durch die Notation S2dy(t(i); t(i-1)) angegeben.

Die Zeile 10 enthält die vom Mikroprozessor 60 in Abhängigkeit von den Positionskoordinatenänderungen des Smartphones 20, welche in den Zeilen 4 und 5 eingetragen sind, und den Positionskoordinatenänderungen des Smartphones 20', welche in den Zeilen 8 und 9 eingetragen sind, berechneten, betragsmäßig maximalen Abstandsänderungen der unbekannten Strecke s bzw. des unbekannten Abstands zwischen den unbekannten Positionen des Smartphone 20 und des Smartphones 20' zwischen dem jeweiligen Zeitpunkt t(i) und einem früheren Zeitpunkt t(i-1). Dies wird durch die Notation ds(t(i))=:ds(t(i); t(i-1)) angegeben. Den in der Tabelle enthaltenen Zahlen der Zeilen 2 bis 10 ist jeweils die Einheit m zugeordnet.

Für die Fehler der Beschleunigungsmesser 30 und 30' wurden beispielhafte Werte einer Standardabweichung von ca. 7 % der zurückgelegten Strecke gewählt und diese Fehler zusätzlich auf Inkremente von 0,05 Meter gerundet. Die Werte für S1dX, S1dY, S2dX und S2dY wurden aus den vorgegebenen unbekannten fehlerfreien Koordinaten eines vorherigen Zeitpunktes berechnet, indem die simulierten Fehler des jeweiligen Beschleunigungsmessers aufaddiert wurden.

Angenommen sei nunmehr, dass der Benutzer des Smartphones 20 eine beliebige, frei wählbare Startposition am Smartphone 20 eingibt und dass diese Startposition zum Beispiel im Datenspeicher 52 abgelegt wird. Die Startposition wird im vorliegenden Beispiel durch einen beliebigen Punkt P1(X1;Y1) in einem X-Y-Koordinatensystem für einen beliebigen Zeitpunkt t(0) definiert. In ähnlicher Weise gibt der Benutzer des Smartphones 20' eine beliebige, frei wählbare Startposition am Smartphone 20' ein, die zum Beispiel im Datenspeicher 52' abgelegt wird. Die Startposition sei wiederum durch einen beliebigen Punkt P2(X2; Y2) in einem XY-Koordinatensystem für den Zeitpunkt t(0) definiert. Zu beachten ist, dass diese beliebigen Startpunkte (nicht dargestellt) nicht der unbekannten, fehlerfreien Position (S1X(t(0)); S1Y(t(0))) des Smartphones 20 bzw. der unbekannten, fehlerfreien Position (S2X(t(0)); S2Y (t(0))) des Smartphones 20' entsprechen.

Weiterhin sei angenommen, dass der Benutzer des Smartphones 20 die relative Bewegung der Smartphones 20 und 20', d.h. die Abstandsänderungen der unbekannten Strecke zwischen den beiden Smartphones 20 und 20' zu mehreren Zeitpunkten beobachten möchte. Hierzu kann er ein im Programmspeicher 50 gespeichertes Anwendungsprogramm aufrufen. Unter Ansprechen auf das Anwendungsprogramm veranlasst der Mikroprozessor 60 den Beschleunigungsmesser 30, zum Zeitpunkt t(1) die Positionskoordinatenänderung bezüglich der Startposition des Smartphones 20 und ferner für weitere Zeitpunkte t(i), mit i=2, 3...n jeweils eine Positionskoordinatenänderung bezüglich der Positionskoordinaten des Smartphones 20 eines früheren Zeitpunktes t(i-1) zu ermitteln. Angemerkt sei, dass der Mikroprozessor 60 dazu ausgebildet sein kann, nach jeder Ermittlung einer Positionskoordinatenänderung die Positionskoordinaten X und Y wieder auf den anfangs gewählten Startpunkt zurück zu setzten. Auf diese Weise wird jede Positionskoordinatenänderung bezüglich des Startpunktes ermittelt. Die ermittelten Positionskoordinatenänderungen hinsichtlich des Smartphones 20 sind in den Zeilen 4 und 5 der in Fig. 2 gezeigten Tabelle eingetragen. Diese Positionskoordinatenänderungen werden zusammen mit den dazugehörenden Zeitpunkten vorzugsweise im Datenspeicher 52 abgelegt. Unter Ansprechen auf das Anwendungsprogramm veranlasst der Mikroprozessor 60 zudem den Beschleunigungsmesser 30', zum Zeitpunkt t(1) die Positionskoordinatenänderung bezüglich der Startposition des Smartphones 20' und ferner für die weiteren Zeitpunkte t(i), mit i=2, 3...n jeweils eine Positionskoordinatenänderung bezüglich der Positionskoordinaten des Smartphones 20' eines früheren Zeitpunktes t(i-1) zu ermitteln. Angemerkt sei, dass der Mikroprozessor 60' dazu ausgebildet sein kann, nach jeder Ermittlung einer Positionskoordinatenänderung die Positionskoordinaten X und Y wieder auf den anfangs gewählten Startpunkt zurück zu setzen. Auf diese Weise wird jede Positionskoordinatenänderung bezüglich des Startpunktes ermittelt. Alternativ werden bei jeder Ermittlung der Positionskoordinatenänderung Positionskoordinaten X, Y als Bezugsgrößen verwendet, die sich jeweils um die zuvor berechneten Änderungen der Positionskoordinaten X und Y verändern. Die ermittelten Positionskoordinatenänderungen hinsichtlich des Smartphones 20' sind in den Zeilen 8 und 9 der in Fig. 2 gezeigten Tabelle eingetragen. Diese Positionskoordinatenänderungen werden zusammen mit den dazugehörenden Zeitpunkten vorzugsweise im Datenspeicher 52' abgelegt und zum Smartphone 20 übertragen. Dort werden sie im Datenspeicher 52 abgelegt.

Anhand der Spalte 6 und den Zeilen 4 und 5 der in Fig. 2 gezeigten Tabelle wird erläutert, wie der Mikroprozessor 60 eine Abstandsänderung zwischen den Smartphones 20 und 20' während des Zeitpunktes t(3) und t(3-1=2) berechnet. Tatsächlich im Sinne der Simulation bewege sich das Smartphone 20 während der Zeitpunkte t(2) und t(3) vom Punkt (x=4,5; y=3) zum Punkt (x=6; y= 3). Diese beiden unbekannten und fehlerfreien Punkte sind in Fig. 2 als S1(t2)) und S1(t(3)) dargestellt. Die vom Beschleunigungssensor 30 hierzu ermittelten fehlerbehafteten Positionskoordinatenänderungen betragen 1,6 bzw. -0,1, wie aus den Zeilen 4 und 5 ersichtlich. Dieser Sachverhalt ist in Fig. 2 durch eine horizontale und vertikale Linie illustriert, welche den Punkt SI(t(2)) mit dem unbekannten und fehlerbehafteten Punkt S1(t(3)) verbinden.

In Verbindung mit Spalte 6 und den Zeilen 8 und 9 der in Fig. 2 gezeigten Tabelle wird nunmehr erläutert, wie der Mikroprozessor 60 eine Abstandsänderung zwischen den Smartphones 20 und 20' während des Zeitpunktes t(3) und t(3-1=2) berechnet. Tatsächlich im Sinne der Simulation bewege sich das Smartphone 20' während der Zeitpunkte t(2) und t(3) vom Punkt (x=5; y=0) zum Punkt (x=6; y= 0). Diese beiden unbekannten und fehlerfreien Punkte sind in Fig. 2 als S2(t2)) und S2(t(3)) dargestellt. Die vom Beschleunigungssensor 30' hierzu ermittelten fehlerbehafteten Positionskoordinatenänderungen betragen 1,05 bzw. 0,15, wie aus den Zeilen 8 und 9 ersichtlich. Dieser Sachverhalt ist in Fig. 2 durch eine horizontale und vertikale Linie illustriert, welche den Punkt S2(t(2)) mit dem unbekannten und fehlerbehafteten Punkt S2(t(3)) verbinden.

Der Mikroprozessor 60 berechnet die betragsmäßig maximale Abstandsänderung zwischen den Smartphones 20 und 20' während zweier Zeitpunkte t(i) und t(i-1) gemäß der Gleichung:

```
ds(t(i)) = |Wurzel((S1dX(t(i))-S2dX(t(i)))² +
                (S1dY(t(i))-S2dY(t(i)))²)|,
```

wobei

```
ds(t(i))=:ds(t(i); t(i-1)),
```

```
S1dX(t(i))=:S1dX(t(i)); t(i-1)),
```

```
S1dY(t(i))=:S1dY(t(i)); t(i-1))
```

```
S21dX(t(i))=:S2dX(t(i)); t(i-1))
```

und

```
S21dY(t(i))=:S21dY(t(i)); t(i-1)).
```

Folglich berechnet der Mikroprozessor 60 die betragsmäßig maximale Abstandsänderung zwischen den Smartphones 20 und 20' während der Zeitpunkte t(2) und t(3) zu

```
ds(t(3)) = |Wurzel(1,6-1,05)² +   ⊇  ▌ (-0,1-0,  ▟ ⊇
(-01-0, 15)²| = ca. 0,6.
```

Eine ähnliche Situation ist in der Fig. 2 für den Zeitpunkt t(9) dargestellt. Für den Zeitpunkt t(9) berechnet der Mikroprozessor 60 eine betragsmäßig maximale Abstandsänderung ds(t(9)) = 0,2.

Dass die betragsmäßig maximale Abstandsänderung ds(t(i)) der unbekannten Strecke zwischen den Smartphones 20 und 20' gemäß der oben genannten Gleichung berechnet werden kann, wird anhand der Fig. 3 und 4 bewiesen.

Die Grafik A der Fig. 3 zeigt einen vergrößerten Ausschnitt zweier absoluter, unbekannter Positionen des Smartphones 20 und des Smartphones 20' zu einem Zeitpunkt t(i-1) sowie die unbekannten fehlerfreien Positionen des Smartphones 20 und des Smartphones 20' jeweils zum Zeitpunkt t(i). Weiterhin ist in der Grafik A die unbekannte, fehlerhafte Position des Smartphones 20 und die unbekannte, fehlerhafte Position des Smartphones 20' jeweils durch einen Kreis zum Zeitpunkt t(i) dargestellt. Die von den Beschleunigungssensoren 30 beziehungsweise 30' berechneten Positionskoordinatenänderungen sind in der Grafik A durch die jeweiligen horizontalen und vertikalen Strecken dargestellt. Die fehlerbehafteten unbekannten Positionen der Smartphones 20 und 20' ergeben sich aus fehlerbehafteten Messungen der Beschleunigungssensoren 30 und 30'. Die unbekannte, fehlerfreie Strecke sS1S2(t(i)) zwischen dem Smartphone 20 und dem Smartphone 20' zum Zeitpunkt t(i) ist durch eine in Fettdruck gezeichnete Linie dargestellt.

Werden die unbekannten, fehlerfreien Punkte S1(t(i)) und S2(t(i)) um den Vektor S2d(t(i)) = (S2dX(t(i)); S2dY(t(i))), der der Positionskoordinatenänderung zum Zeitpunkt t(i) entspricht, verschoben, hebt sich die Positionskoordinatenänderung S2dX(t(i)) und S2dY(t(i)) hinsichtlich des Punktes S2(t(i)) auf und die Abstandsänderung ds(t(i)) wird allein durch den Punkt

S1(t(i)), S2d(t(i) und S1d(t(i)) = (S1dX(t(i)); S1dY(t(i))) dargestellt. Mit anderen Worten: Durch die Verschiebung aller Punkte S1(t(i)) und S2(t(i)) um S2d(t(i)) ändert sich die Streckenlänge zwischen zwei Punkten nicht, also auch die Streckenlänge ds(t(i)) nicht. Dieser Sachverhalt ergibt sich aus der Grafik B.

Ein Vergleich der Fig. 3 und 4 zeigt, dass, wenn der Winkel α (Bezeichnung alpha in den Grafiken), der von der Streckenlänge sS1S2(t(i)) zwischen den Smartphones 20 und 20' und der betragsmäßig maximalen Abstandsänderung ds(t(i)), dargestellt durch die gestrichelte Linie, eingeschlossen wird, 0 Grad oder 180 Grad ist, die maximale Streckenlängenänderung gegeben ist durch

$$sS1S2(t(i)) = sS1S2(t(i-1)) - ds(t(i))$$

bzw. durch

$$sS1S2(t(i)) = sS1S2(t(i-1)) + ds(t(i)).$$

**Patentansprüche**

1. Drahtloses Kommunikationssystem (10) zum Berechnen der betragsmäßig maximalen Abstandsänderung zwischen wenigstens zwei mobilen Kommunikationseinrichtungen, aufweisend:

eine erste mobile Kommunikationseinrichtung (S1) und
eine zweite mobile Kommunikationseinrichtung (S2), die jeweils eine Messeinrichtung (30, 30') zum Ermitteln einer Positionskoordinatenänderung der jeweiligen mobilen Kommunikationseinrichtung (S1, S2) zwischen einem Startzeitpunkt t(0) und einem Zeitpunkt t(1) aufweisen, wobei die Messeinrichtungen (30, 30') jeweils einen Beschleunigungsmesser und einen Kompass aufweisen, wobei die Positionskoordinaten der ersten mobilen Kommunikationseinrichtung (S1) und der zweiten mobilen Kommunikationseinrichtung (S2) für den Startzeitpunkt t(0) beliebig vorgegeben sind, wobei wenigstens die erste mobile Kommunikationseinrichtung (S1) eine Auswerte- und Steuereinrichtung (60) aufweist, die dazu ausgebildet ist,

- die Messeinrichtung (30) der ersten mobilen Kommunikationseinrichtung (S1) zu veranlassen, eine Positionskoordinatenänderung der ersten mobilen Kommunikationseinrichtung (S1) zwischen dem Startzeitpunkt t(0) und dem Zeitpunkt t(1) zu ermitteln, indem Eingangssignale des Beschleunigungsmessers und des Kompasses der Messeinrichtung (30) der ersten mobilen Kommunikationseinrichtung (S1) verarbeitet werden,
- die Messeinrichtung (30') der zweiten mobilen Kommunikationseinrichtung (S2) zu veranlassen, eine Positionskoordinatenänderung der zweiten mobilen Kommunikationseinrichtung (S2) zwischen dem Startzeitpunkt t(0) und dem Zeitpunkt t(1) zu ermitteln, indem Eingangssignale des Beschleunigungsmessers und des Kompasses der Messeinrichtung (30') der zweiten mobilen Kommunikationseinrichtung (S2) verarbeitet werden
- die zweite mobile Kommunikationseinrichtung (S2) zu veranlassen, die ermittelte Positionskoordinatenänderung zur ersten mobilen Kommunikationseinrichtung (S1) zu übertragen, und
- die betragsmäßig maximale Abstandsänderung zwischen der ersten mobilen Kommunikationseinrichtung (S1) und der zweiten mobilen Kommunikationseinrichtung (S2) in Abhängigkeit von der Positionskoordinatenänderung der ersten mobilen Kommunikationseinrichtung (S1) und der Positionskoordinatenänderung der zweiten mobilen Kommunikationseinrichtung (S2) zwischen dem Startzeitpunkt t(0) und dem Zeitpunkt t(1) zu ermitteln.

2. Drahtloses Kommunikationssystem nach Anspruch 1, **dadurch gekennzeichnet, dass**
die Auswerte- und Steuereinrichtung der ersten mobilen Kommunikationseinrichtung dazu ausgebildet ist,

- die Messeinrichtung der ersten mobilen Kommunikationseinrichtung zu veranlassen, für weitere aufeinanderfolgende Zeitpunkte t(i), mit i = 2, 3, 4...n, jeweils die Positionskoordinatenänderungen der ersten mobilen Kommunikationseinrichtung relativ zu den Positionskoordinaten wenigstens eines früheren Zeitpunkts t(i-1) zu ermitteln,
- die Messeinrichtung der zweiten mobilen Kommunikationseinrichtung zu veranlassen, für die weiteren aufeinanderfolgenden Zeitpunkte t(i) jeweils die Positionskoordinatenänderungen der zweiten mobilen Kommunikationseinrichtung relativ zu den Positionskoordinaten wenigstens eines früheren Zeitpunkts t(i-1) zu ermitteln,
- die zweite mobile Kommunikationseinrichtung aufzufordern, die ermittelten Positionskoordinatenänderungen zusammen mit den Zeitpunkten t(i) zur ersten mobilen Kommunikationseinrichtung zu übertragen, und
- für wenigstens einen der weiteren Zeitpunkte t(i) die betragsmäßig maximale Abstandsänderung zwischen der ersten mobilen Kommunikationseinrichtung und der zweiten mobilen Kommunikationseinrichtung in Abhängigkeit von den Positionskoordinatenänderungen der ersten und zweiten mobilen Kommunikationseinrichtung während des jeweiligen Zeitpunktes t(i) und dem wenigstens einen früheren Zeitpunkt t(i-1) zu ermitteln.

3. Verfahren zum Berechnen der betragsmäßig maximalen Abstandsänderung zwischen zwei mobilen Kommunikationseinrichtungen, die jeweils eine Messeinrichtung (30,30') umfassend einen Beschleunigungsmesser und einen Kompass aufweisen, mit folgenden Verfahrensschritten:

a1) Speichern in einer ersten mobilen Kommunikationseinrichtung (S1) die Positionskoordinaten einer frei wählbaren Startposition eines Startzeitpunktes t(0);

a2) Speichern in einer zweiten mobilen Kommunikationseinrichtung (S2) die Positionskoordinaten einer frei wählbaren Startposition des Startzeitpunktes t(0);

b1) Ermitteln in der ersten mobilen Kommunikationseinrichtung (S1) zu einem Zeitpunkt t(1) einer Positionskoordinatenänderung bezüglich der Positionskoordinaten der Startposition der ersten mobilen Kommunikationseinrichtung (S1), basierend auf den Eingangssignalen des Beschleunigungsmessers und des Kompasses der Messeinrichtung (30) der ersten mobilen Kommunikationseinrichtung;

b2) Ermitteln in der zweiten mobilen Kommunikationseinrichtung (S2) zu dem Zeitpunkt t(1) einer Positionskoordinatenänderung bezüglich der Positionskoordinaten der Startposition der zweiten mobilen Kommunikationseinrichtung (S2), basierend auf den Eingangssignalen des Beschleunigungsmessers und des Kompasses der Messeinrichtung (30') der zweiten mobilen Kommunikationseinrichtung; und

c) Berechnen, in wenigstens einer der mobilen Kommunikationseinrichtungen, für den Zeitpunkt t(1) die betragsmäßig maximale Abstandsänderung zwischen der ersten mobilen Kommunikationseinrichtung (S1) und der zweiten mobilen Kommunikationseinrichtung (S2) vom Startzeitpunkt t(0) bis zum Zeitpunkt t(1) in Abhängigkeit von den in den Schritt b1) und b2) ermittelten Positionskoordinatenänderungen.

4. Verfahren nach Anspruch 3, **dadurch gekennzeichnet, dass** in Schritt b1) in der ersten mobilen Kommunikationseinrichtung (S1) für weitere aufeinanderfolgende Zeitpunkt t(i), mit i = 2, 3, 4...n, jeweils eine Positionskoordinatenänderung bezüglich der Positionskoordinaten der ersten mobilen Kommunikationseinrichtung (S1) wenigstens eines früheren Zeitpunktes t(i-1) ermittelt werden, in Schritt b2) in der zweiten mobilen Kommunikationseinrichtung (S2) für die weiteren aufeinanderfolgende Zeitpunkt t(i), mit i = 2, 3, 4...n, jeweils eine Positionskoordinatenänderung bezüglich der Positionskoordinaten der zweiten mobilen Kommunikationseinrichtung (S2) wenigstens eines früheren Zeitpunktes t(i-1) ermittelt werden, und dass in Schritt c) in wenigstens einer der mobilen Kommunikationseinrichtungen für wenigstens einen weiteren Zeitpunkt t(i) die betragsmäßig maximale Abstandsänderung zwischen der ersten mobilen Kommunikationseinrichtung (S1) und der zweiten mobilen Kommunikationseinrichtung (S2) in Abhängigkeit von den in den Schritt b1) und b2) ermittelten Positionskoordinatenänderungen berechnet werden.

## Claims

1. A wireless communication system (10) for calculating the maximum absolute value of change in distance between at least two mobile communication devices, comprising:

a first mobile communication device (S1) and a second mobile communication device (S2), each including a measuring device (30, 30') for determining a change in position coordinates of the respective mobile communication device (S1, S2) between a start time t(0) and a time t(1), the measuring devices (30, 30') each comprising an accelerometer and a compass, wherein the position coordinates of the first mobile communication device (S1) and of the second mobile communication device (S2) for the start time t(0) are arbitrarily predefined;

wherein at least the first mobile communication device (S1) includes an evaluation and control device (60) which is configured

- to cause the measuring device (30) of the first mobile communication device (S1) to determine a change in position coordinates of the first mobile communication device (S1) between start time t(0) and time t(1) by processing input signals from the accelerometer and from the compass of the measuring device (30) of the first mobile communication device (S1);
- to cause the measuring device (30') of the second mobile communication device (S2) to determine a change in position coordinates of the second mobile communication device (S2) between start time t(0) and time t(1) by processing input signals from the accelerometer and from the compass of the measuring device (30') of the second mobile communication device (S2);
- to cause the second mobile communication device (S2) to transmit the determined change in position coordinates to the first mobile communication device (S1); and
- to determine the maximum absolute value of change in distance between the first mobile communication device (S1) and the second mobile communication device (S2) on the basis of the change in position coordinates of the first mobile communication device (S1) and the change in position coordinates of the second mobile communication device (S2) between start time t(0) and time t(1).

2. The wireless communication system according to claim 1, **characterised in that** the evaluation and control device of the first mobile communication device is configured

- to cause the measuring device of the first mobile communication device to determine the changes in position coordinates of the first mobile communication device for each one of further successive points in time t(i), with i = 2, 3, 4 ... n, relative to the position coordinates of at least one earlier point in time t(i-1);
- to cause the measuring device of the second mobile communication device to determine the changes in position coordinates of the second mobile communication device for each one of the further successive points in times t(i) relative to the position coordinates of at least one earlier point in time t(i-1);
- to request the second mobile communication device to transmit the determined changes in position coordinates together with the points in time t(i) to the first mobile communication device; and
- to determine the maximum absolute value of change in distance between the first mobile communication device and the second mobile communication device for at least one of the further points in time t(i) on the basis of the changes in position coordinates of the first and second mobile communication devices between the respective point in time t(i) and the at least one earlier point in time t(i-1).

3. A method for calculating the maximum absolute value of change in distance between at least two mobile communication devices, each of which includes a measuring device (30, 30') comprising an accelerometer and a compass, comprising the method steps of:

a1) storing, in a first mobile communication device (S1), the position coordinates of a freely selectable start position at a start time t(0);
a2) storing, in a second mobile communication device (S2), the position coordinates of a freely selectable start position at the start time t(0);
b1) determining, in the first mobile communication device (S1) at a time t(1), a change in position coordinates relative to the position coordinates of the start position of the first mobile communication device (S1) on the basis of the input signals from the accelerometer and the compass of the measuring device (30) of the first mobile communication device;
b2) determining, in the second mobile communication device (S2) at the time t(1), a change in position coordinates relative to the position coordinates of the start position of the second mobile communication device (S2) on the basis of the input signals from the accelerometer and the compass of the measuring device (30') of the second mobile communication device; and c) calculating, for the time t(1), in at least one of the mobile communication devices, the maximum absolute value of change in distance between the first mobile communication device (S1) and the second mobile communication device (S2) between start time t(0) and time t(1) on the basis of the changes in position coordinates as determined in steps b1) and b2).

4. The method according to claim 3, **characterised in that** in step b1), in the first mobile communication device (S1), a respective change in position coordinates is determined for further successive points in time t(i), with i = 2, 3, 4 ... n, relative to the position coordinates of the first mobile communication device (S1) for at least one earlier point in time t(i-1);
in step b2), in the second mobile communication device (S2), a respective change in position coordinates is determined for the further successive points in time t(i), with i = 2, 3, 4 ... n, relative to the position coordinates of the second mobile communication device (S2) for at least one earlier point in time t(i-1); and that
in step c), the maximum absolute value of change in distance between the first mobile communication device (S1) and the second mobile communication device (S2) is calculated in at least one of the mobile communication devices for at least one further point in time t(i) on the basis of the changes in position coordinates as determined in steps b1) and b2).

**Revendications**

1. Système de communication sans fil (10) destiné au calcul de la variation de distance maximale en quantité entre au moins deux équipements de communication mobiles, comportant :
un premier équipement de communication mobile (S1) et un deuxième équipement de communication mobile (S2) qui comportent respectivement un équipement de mesure (30, 30') destiné à déterminer une variation des coordonnées de position de l'équipement de communication mobile (S1, S2) respectif entre un instant de départ t(0) et un instant t(1), les équipements de mesure (30, 30') comportant respectivement un accéléromètre et un compas, les coordonnées de position du premier équipement de communication mobile (S1) et du deuxième équipement de communication mobile (S2) pour l'instant de départ t(0) étant spécifiées librement, au moins le premier équipement de communication mobile (S1) comportant un équipement d'analyse et de commande (60) qui est constitué

- pour amener l'équipement de mesure (30) du premier équipement de communication mobile (S1) à déterminer une variation des coordonnées de position du premier équipement de communication mobile (S1) entre l'instant de départ t(0) et l'instant t(1) par le fait que des signaux d'entrée de l'accéléromètre et du compas de l'équipement de mesure (30) du premier équipement de communication mobile (S1) sont traités,
- pour amener l'équipement de mesure (30') du deuxième équipement de communication mobile (S2) à déterminer une variation des coordonnées de position du deuxième équipement de communication mobile (S2) entre l'instant de départ t(0) et l'instant t(1) par le fait que des signaux d'entrée de l'accéléromètre et du compas de l'équipement de mesure (30') du deuxième équipement de communication mobile (S2) sont traités,
- pour amener le deuxième équipement de communication mobile (S2) à transmettre au premier équipement de communication mobile (S1) la variation des coordonnées de position déterminée, et
- pour déterminer la variation de distance maximale en quantité entre le premier équipement de communication mobile (S1) et le deuxième équipement de communication mobile (S2) en fonction de la variation des coordonnées de position du premier équipement de communication mobile (S1) et de la variation des coordonnées de position du deuxième équipement de communication mobile (S2) entre l'instant de départ t(0) et l'instant t(1).

2. Système de communication sans fil selon la revendication 1, **caractérisé en ce que** l'équipement d'analyse et de commande du premier équipement de communication mobile est constitué

- pour amener l'équipement de mesure du premier équipement de communication mobile à déterminer pour d'autres instants t(i) successifs, avec i = 2, 3, 4...n, respectivement les variations des coordonnées de position du premier équipement de communication mobile relativement aux coordonnées de position d'au moins un instant t(i-1) antérieur,
- pour amener l'équipement de mesure du deuxième équipement de communication mobile à déterminer pour les autres instants t(i) successifs respectivement les variations des coordonnées de position du deuxième équipement de communication mobile relativement aux coordonnées de position d'au moins un instant t(i-1) antérieur,
- pour ordonner au deuxième équipement de communication mobile de transmettre au premier équipement de communication mobile les variations des coordonnées de position déterminées conjointement avec les instants t(i), et
- pour déterminer pour au moins un des autres instants t(i) la variation de distance entre le premier équipement de communication mobile et le deuxième équipement de communication mobile en fonction des variations des coordonnées de position du premier et du deuxième équipement de communication mobile pendant l'instant t(i) respectif et l'au moins un instant t(i-1) antérieur.

3. Procédé de calcul de la variation de distance maximale en quantité entre deux équipements de communication mobiles qui comportent respectivement un équipement de mesure (30, 30') comprenant un accéléromètre et un compas, avec les étapes de procédé suivantes :

a1) enregistrement, dans un premier équipement de communication mobile (S1), des coordonnées de position d'une position de départ, pouvant être choisie librement, d'un instant de départ t(0) ;
a2) enregistrement, dans un deuxième équipement de communication mobile (S2), des coordonnées de position d'une position de départ, pouvant être choisie librement, d'un instant de départ t(0) ;
b1) détermination, dans le premier équipement de communication mobile (S1), à un instant t(1), d'une variation des coordonnées de position par rapport aux coordonnées de position de la position de départ du premier équipement de communication mobile (S1), sur la base des signaux d'entrée de l'accéléromètre et du compas de l'équipement de mesure (30) du premier équipement de communication mobile ;
b2) détermination, dans le deuxième équipement de communication mobile (S2), à l'instant t(1), d'une variation des coordonnées de position par rapport aux coordonnées de position de la position de départ du deuxième équipement de communication mobile (S2), sur la base des signaux d'entrée de l'accéléromètre et du compas de l'équipement de mesure (30') du deuxième équipement de communication mobile, et
c) calcul, dans au moins un des équipements de communication mobiles, pour l'instant t(1), de la variation de distance maximale en quantité entre le premier équipement de communication mobile (S1) et le deuxième équipement de communication mobile (S2) à partir de l'instant de départ t(0) jusqu'à l'instant t(1) en fonction des variations des coordonnées de position déterminées dans l'étape b1) et b2).

4. Procédé selon la revendication 3,
**caractérisé en ce que**,
dans l'étape b1), dans le premier équipement de communication mobile (S1), pour d'autres instants t(i) successifs, avec i = 2, 3, 4...n, respectivement une variation des coordonnées de position par rapport aux coordonnées de position du premier équipement de communication mobile (S1) d'au moins un instant t(i-1) antérieur est déterminée, dans l'étape b2), dans le deuxième équipement de communication mobile (S2), pour les autres instants t(i) successifs, avec i = 2, 3, 4...n, respectivement une variation des coordonnées de position par rapport aux coordonnées de position du deuxième équipement de communication mobile (S2) d'au moins un instant t(i-1) antérieur est déterminée, et **en ce que**
dans l'étape c), dans au moins un des équipements de communication mobiles, pour au moins un autre instant t(i), la variation de distance maximale en quantité entre le premier équipement de communication mobile (S1) et le deuxième équipement de communication mobile (S2) en fonction des variations des coordonnées de position déterminées dans les étapes b1) et b2) est calculée.

Fig. 1

| # | | [/] | 0 | 1 | 2 | 3 | 4 | 5 | 6 | 7 | 8 | 9 | 10 |
|---|---|---|---|---|---|---|---|---|---|---|---|---|---|
| 1 | Zeitpunkt t(i) | [/] | 0 | 1 | 2 | 3 | 4 | 5 | 6 | 7 | 8 | 9 | 10 |
| 2 | S1X (t(i)) unbekannt | [m] | 3,00 | 4,00 | 4,50 | 6,00 | 7,00 | 8,00 | 9,00 | 10,00 | 11,00 | 12,00 | 13,00 |
| 3 | S1Y (t(i)) unbekannt | [m] | 3,00 | 3,00 | 3,00 | 3,00 | 3,00 | 2,00 | 2,00 | 2,00 | 2,00 | 2,00 | 3,50 |
| 4 | **S1dX (t(i);t(i-1))** | [m] | 1,00 | 0,95 | 0,55 | **1,60** | 0,90 | 1,00 | 0,90 | 1,10 | 0,95 | **0,90** | 0,95 |
| 5 | **S1dY (t(i);t(i-1))** | [m] | 0,05 | 0,00 | -0,05 | **-0,10** | 0,10 | -1,05 | 0,05 | -0,05 | 0,10 | **0,05** | 1,55 |
| 6 | S2X (t(i)) unbekannt | [m] | 3,00 | 4,00 | 5,00 | 6,00 | 7,00 | 8,00 | 9,00 | 10,00 | 11,00 | 12,00 | 12,50 |
| 7 | S2Y (t(i)) unbekannt | [m] | 0,00 | 0,00 | 0,00 | 0,00 | 1,00 | 0,00 | 0,00 | 0,00 | 0,00 | 0,00 | 0,50 |
| 8 | **S2dX (t(i);t(i-1))** | [m] | 0,95 | 1,05 | 0,95 | **1,05** | 1,10 | 1,05 | 1,00 | 0,90 | 1,05 | **0,90** | 0,55 |
| 9 | **S2dY (t(i);t(i-1))** | [m] | 0,05 | -0,05 | 0,10 | **0,15** | 1,05 | -1,00 | 0,05 | -0,05 | 0,10 | **-0,15** | 0,40 |
| 10 | **ds(t(i))=:ds(t(i);t(i-1))** | [m] | 0,05 | 0,11 | 0,43 | **0,60** | 0,97 | 0,07 | 0,10 | 0,20 | 0,10 | **0,20** | 1,22 |

$$ds(t(3)) = ca.\ \mathbf{0{,}60}.. = |\ WURZEL\ (\ (1{,}6\text{-}1{,}05)^2 + (\text{-}0{,}1\text{-}0{,}15)^2\ )\ |$$

+Y

+X

S1 Bewegung

S2 Bewegung

S1 (t(0))  S1 (t(2))

S1dY (t(3)) =: S1dY (t(3);t(3-1))

S1dX (t(3)) =: S1dX (t(3);t(3-1))

S1 (t(3)) unbekannt u. fehlerfrei

S1 (t(3)) unbekannt u. fehlerbehaftet

S1 (t(9)) fehlerbehaftet

S2 (t(0))  S2 (t(2))

S2dX (t(3))

S2 (t(3)) unbekannt u. fehlerbehaftet

S2dY (t(3))  S2 (t(3)) unbekannt u. fehlerfrei

S2 (t(9)) fehlerbehaftet

Fig. 2

EP 3 096 112 B1

Grafik A:

S1dY (t(i)) =: S1dY (t(i);t(i-1))

S1 (t(i-1))
unbekannt fehlerfrei

S1dX (t(i)) =: S1dX (t(i);t(i-1))

S1 (t(i)) unbekannt u. fehlerfrei

S1 (t(i)) unbekannt u. fehlerbehaftet

sS1S2 (t(i-1))
unbekannt fehlerfrei

+Y

S2dX (t(i))

S2 (t(i-1))
unbekannt fehlerfrei

S2 (t(i)) unbekannt u. fehlerbehaftet

S2 (t(i)) unbekannt u. fehlerfrei

S2dY (t(i))

+X

Grafik B:

S1dY (t(i)) =: S1dY (t(i);t(i-1))

S1 (t(i-1))
unbekannt fehlerfrei

S1dX (t(i)) =: S1dX (t(i);t(i-1))

S1 (t(i)) unbekannt u. fehlerbehaftet

sS1S2 (t(i-1))
unbekannt fehlerfrei

+Y

**ds(t(i))**

S2dY (t(i))

S2dX (t(i))

S2 (t(i-1))
unbekannt fehlerfrei
= S2(t(i))
fehlerbehaftet verschoben um S2d(t(i))

alpha

S1 (t(i)) unbekannt u. fehlerbehaftet
verschoben um
S2d(t(i))=(S2dX(t(i));S2dY(t(i)))

+X

Fig. 3

| # | | |
|---|---|---|
| 1 | Zeitpunkt  t(i) | [/] |
| 2 | S1X (t(i)) unbekannt | [m] |
| 3 | S1Y (t(i)) unbekannt | [m] |
| 4 | **S1dX (t(i);t(i-1))** | [m] |
| 5 | **S1dY (t(i);t(i-1))** | [m] |
| 6 | S2X (t(i)) unbekannt | [m] |
| 7 | S2Y (t(i)) unbekannt | [m] |
| 8 | **S2dX (t(i);t(i-1))** | [m] |
| 9 | **S2dY (t(i);t(i-1))** | [m] |
| 10 | **ds(t(i))=:ds(t(i);t(i-1))** | [m] |

Grafik C: Extremwerte zur Streckenkorrektur sS1S2
bei alpha=0 Grad und 180 Grad durch (+)(-) ds(t(i))

S1dY (t(i)) =: S1dY (t(i);t(i-1))

S1 (t(i-1))
unbekannt u. fehlerfrei

S1dX (t(i)) =: S1dX (t(i);t(i-1))

S1 (t(i)) unbekannt u. fehlerbehaftet

**ds(t(i))**

S2dY (t(i))

sS1S2 (t(i-1))
unbekannt u. fehlerfrei

S2dX (t(i))

S2 (t(i-1))
unbekannt u. fehlerfrei

Hier Fall:
alpha=0 Grad

**ds(t(i)) = | WURZEL ( ( S1dX(t(i))-S2dX(t(i)) )² + ( S1dY(t(i))-S2dY(t(i)) )² ) |**

Die zwei Extremwerte für sS1S2(t(i)) bei alpha 0 Grad oder 180 Grad folgen aus:

**Maximum von sS1S2 bei:  sS1S2 (t(i)) =  sS1S2 (t(i-1)) + ds(t(i))**
**Minimum von  sS1S2 bei:  sS1S2 (t(i)) =  sS1S2 (t(i-1)) -  ds(t(i))**

+Y

+X

Fig. 4

EP 3 096 112 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014201457 A1

**In der Beschreibung aufgeführte Nicht-Patentliteratur**

- SANA: Safety-Aware Navigation App for pedestrian protection in vehicular networks. **HWANG TAE-HWAN et al.** 2014 INTERNATIONAL CONFERENCE ON INFORMATION AND COMMUNIACTION TECHNOLOGY CONVERGENCE (ICTC). IEEE, 22. Oktober 2014, 947-953

- **C.PENG et al.** Point&Connect: Intention-based Device Pairing for Mobile Phone Users. *Proceedings of the 7th International Conference on mobile systems,applications, and services MOBISYS '09,* 22. Juni 2009, 137